# EUROPEAN PATENT SPECIFICATION

(11) **EP 3 717 776 B1**
(45) Date of publication and mention of the grant of the patent: **30.10.2024**
(21) Application number: 17822158.6
(22) Date of filing: 01.12.2017
(51) Int. Cl.: F04D 29/66, F04C 25/02, F01C 21/00, F16F 15/08, F04B 39/12, F04D 17/16, F04D 29/42, F04D 29/60, F04B 39/00, F04B 37/14, F04B 39/14

(54) **VACUUM PUMP FOR ATTACHMENT TO A FRAMEWORK OF A VEHICLE**
VAKUUMPUMPE ZUR BEFESTIGUNG AN EINEM RAHMEN EINES FAHRZEUGS
POMPE À VIDE À FIXER SUR LE CHÂSSIS D'UN VÉHICULE

(43) Date of publication of application: 07.10.2020
(73) Proprietor: HELLA GmbH & Co. KGaA, 59552 Lippstadt (DE)
(72) Inventor: BENSCH, Christopher, 59556 Lippstadt (DE); FELDKAMP, Horst, 59557 Lippstadt (DE); GEUE, Ingo, 59505 Bad Sassendorf (DE); PRAEST, Christian, 59552 Lippstadt (DE); ZHANG, Jianqiu, 45711 Datteln (DE); WOLKE, Raimund, 33397 Rietberg (DE)
(86) International application number: PCT/EP2017/081143
(87) International publication number: WO 2019/105567

(56) References cited:
- WO-A1-03/005532
- WO-A1-2017/089157
- CN-U- 202 152 050
- DE-A1- 102012 112 069
- JP-A- 2008 240 543
- JP-A- 2013 155 623

## Description

The present invention relates to a vacuum pump for attachment to a framework of a vehicle.

Such vacuum pumps are already known in different embodiments.

For example, from the DE 41 09 548 C3 a vacuum pump for a vehicle is known. Said known vacuum pump comprises a mounting assembly for mounting said vacuum pump to a framework of said vehicle with three flanges and three dampers made from rubber corresponding to each other, whereat said mounting assembly is designed and positioned to said framework of said vehicle in an attachment state of said vacuum pump of said vehicle in such a way, that a force acting from said framework onto said vacuum pump via a force transmission path is damped by said dampers.

DE 10 2012 112 069 A1 discloses a pump producing a negative pressure including a presilencer inside a sound absorber. The presilencer is not a damper which damps a force acting from a vehicle framework onto the pump. The presilencer absorbs sound produced by the vacuum pump itself. Furthermore, the mounting plate is a mounting bracket used for fastening the pump to the vehicle framework, whereby the mounting bracket is an integrated bracket and not a separate bracket.

CN 202 152 050 U discloses a vacuum pump mounted into an U-shaped bracket, whereby on the bottom of the U-shaped bracket a rubber gasket is placed in order to securely fix the pump and attenuate noise and vibration generated by the pump.

Furthermore, JP 2013 155 623 A provides in a pump part exhaust outlets on a side surface opposite to the side which is in contact with a body part, a rib projected to the pump part side is integrally formed on a bottom part of a cover body and a chamber with which the surrounding of the exhaust outlets is covered is formed by the rib. The chamber is provided near the exhaust outlets and, thereby, muffling effect of the exhaust sound can be obtained by the chamber. In addition, only the rib is integrally formed on the bottom part of the cover body and, therefore, the chamber which muffles the exhaust sound can be formed with simple structure.

It is an object of the invention to provide a vacuum pump for attachment to a framework of a vehicle of alternative design.

This object is solved by a vacuum pump for attachment to a framework of a vehicle according to claim 1, wherein said mounting bracket is built in such a manner, that all of said solid structures with all of said dampers are substantially encompassed by said mounting bracket in said attachment state of said vacuum pump, whereat said mounting bracket of said mounting assembly comprises a reception for each of said dampers fixed to said corresponding solid structure and said mounting bracket comprises an inspection window for said reception.

A main advantage of the vacuum pump for attachment to a framework of a vehicle according to the invention is, that the overall structure of said mounting assembly of said vacuum pump can be made more rigid but still using dampers with less shore hardness. Less shore hardness of said dampers means an enhanced decoupling of said vacuum pump from said framework of said vehicle. That way, said vacuum pump is securely fastened to said framework of said vehicle, while said vacuum pump is isolated very well from forces acting from said framework of said vehicle onto said vacuum pump at the same time.

Because of the fact, that said mounting assembly comprises three solid structures and three dampers each corresponding to one of said solid structures, said vacuum pump can be mounted to said framework of said vehicle by said mounting assembly of said vacuum pump without any undesired movements of said vacuum pump relative to said framework of said vehicle. For example, undesired rotational movement of said vacuum pump around a rotational axis defined by pairs of solid structures and dampers each corresponding to one of said solid structures. Thus, by using three solid structures and three dampers each corresponding to one of said solid structures it is possible to firmly mount said vacuum pump to said framework of said vehicle.

An advantageous development of the vacuum pump according to the invention is, that said at least one damper is built as a separate part and separable or inseparable fixed to said corresponding at least one solid part of said vacuum pump. This way, the production of said at least one damper is simplified. For example, said at least one damper can be sourced as an individual part.

An advantageous development of the aforementioned embodiment is, that said damper is fixed to said solid structure corresponding to said damper in a separable manner via a clamp-connection. Hereby, the production of said vacuum pump is further simplified. For example, said vacuum pump with said solid structures of said mounting assembly of said vacuum pump can be designed as a basic component which can be modified by using different types of dampers corresponding to said solid structures in order to satisfy different needs of different implementations.

As already mentioned, said dampers corresponding to said solid structures can be of any useful and applicable type, material, dimension and arrangement. Advantageously, said dampers are formed of an elastomer. Dampers made from elastomer can be produced or sourced easily and can be tailored quite simple to the specific needs of a vehicle.

Basically, said mounting bracket can be of any useful and applicable type, material, dimension and arrangement, too. Due to the invention, said mounting bracket is built in such a manner, that all of said solid structures with all of said dampers are substantially encompassed by said mounting bracket in said attachment state of said vacuum pump.

A further advantageous development of the invention is, that said mounting bracket is built and positioned in such a manner, that all of said dampers are secured via said mounting bracket to all of said solid structures. That way, said dampers are kept in place and in proper function, despite adverse conditions, like temperature changes, very high and very low temperatures and severe mechanical stress.

Due to the invention, said mounting bracket of said mounting assembly comprises a reception for each of said dampers fixed to said corresponding solid structures. Hereby, it is possible to reduce the space needed for the arrangement of said mounting assembly of said vacuum pump. Thus, the design of said vacuum pump according to the invention is more compact.

Furthermore, according to the invention said mounting bracket comprises an inspection window for said reception. That way, the presence, proper condition and arrangement of said dampers can be checked after said vacuum pump with said mounting assembly is assembled. For example, it could be possible to inspect the presence, the proper condition and arrangement of said dampers even after said vacuum pump is fastened to said framework of said vehicle via said mounting bracket. Said inspection window for said reception of said mounting bracket can be built as an opening or can be covered by a transparent top.

The Figures are schematic illustrations of a vacuum pump according to the present invention, wherein only the details necessary for the understanding of the invention are shown.

It is shown by:
- Fig. 1: an embodiment of the inventive vacuum pump in a first assembly state of said vacuum pump,
- Fig. 2: said vacuum pump of Fig. 1 in a second assembly state of said vacuum pump,
- Fig. 3: said vacuum pump of Fig. 1 in a third assembly state of said vacuum pump and
- Fig. 4: said vacuum pump of Fig. 1 in an attachment state of said vacuum pump to a framework of a vehicle.

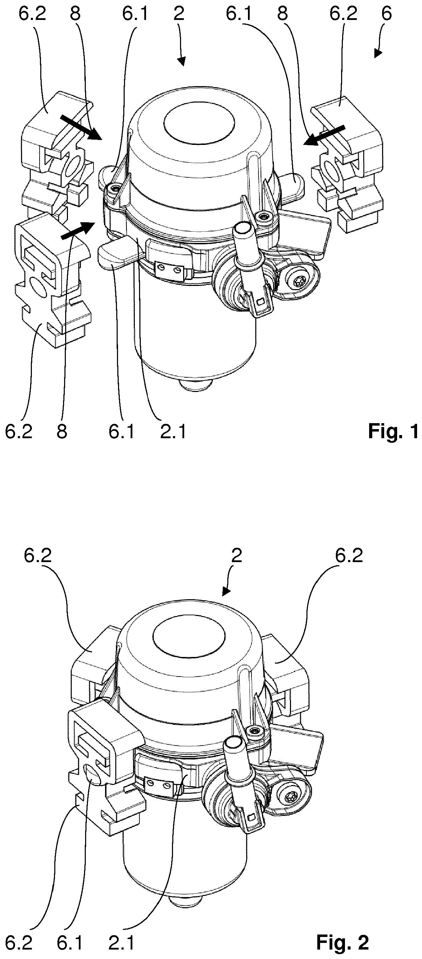

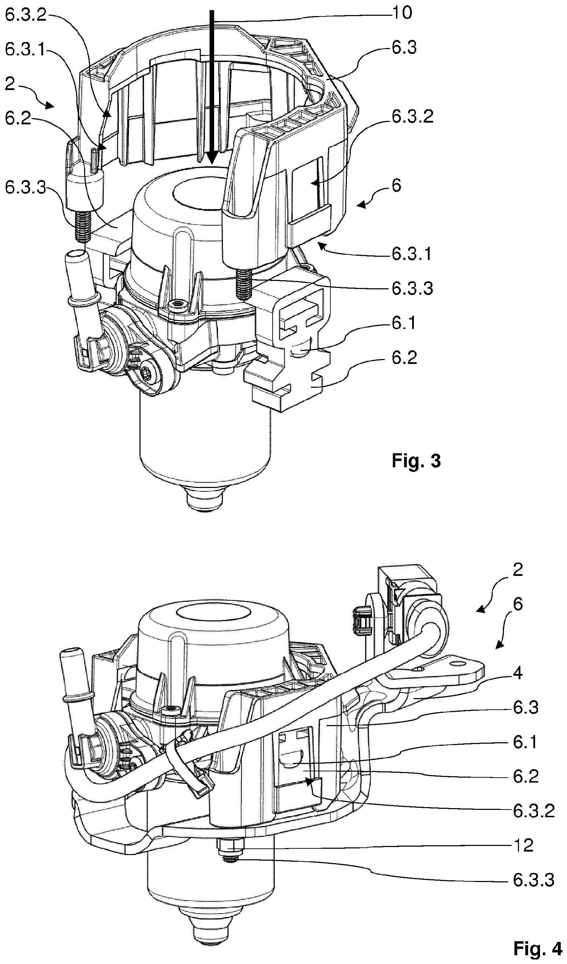

Fig. 1 displays an exemplary embodiment of a vacuum pump 2 for attachment to a framework 4 of a vehicle according to the invention. Said framework 4 is shown in Fig. 4; said vehicle is not displayed. Said vacuum pump 2 comprises a mounting assembly 6 for mounting said vacuum pump 2 to said framework 4 of said vehicle with three solid structures 6.1 and three dampers 6.2, each of said dampers 6.2 corresponding to one of said solid structures 6.1. Thus, said solid structures 6.1 and said dampers 6.2 are arranged pairwise to each other. Said three solid structures 6.1 are an integral part of said vacuum pump 2, namely of a flange 2.1 of said vacuum pump 2.

Said three dampers 6.2 are each formed of an elastomer and built as separate parts of said mounting assembly 6. Each of said three dampers 6.2 is fixed to a corresponding one of said solid structures 6.1 via a clamp-connection. Thus, each of said dampers 6.2 is clamped onto one of said solid structures 6.1 of said mounting assembly 6. This can be seen in Fig. 2. That way, said dampers 6.2 are separable from said solid structures 6.1. Establishing said clamp-connection between said three solid structures 6.1 and said corresponding three dampers 6.2 is symbolized by three arrows 8. Said mounting assembly 6 is designed and positioned to said framework 4 in an attachment state of said vacuum pump 2 in such a way, that a force acting from said framework 4 onto said vacuum pump 2 via a force transmission path is damped by said dampers 6.2. Said attachment state of said vacuum pump 2 is shown in Fig. 4.

Said mounting assembly 6 comprises also a separate mounting bracket 6.3 made from a plastic material and for fastening said vacuum pump 2 to said framework 4 of said vehicle. Said mounting assembly 6 comprising said solid structures 6.1, said dampers 6.2 and said mounting bracket 6.3 is shown in Fig. 3 and 4. Said mounting bracket 6.3 is positioned between said dampers 6.2 and said framework 4 of said vehicle in said attachment state of said vacuum pump 2, with respect to said force transmission path.

Furthermore, said mounting bracket 6.3 is built in such a manner, that all of said three solid structures 6.1 with all of said three dampers 6.2 clamped to said solid structures 6.1 are substantially encompassed by said mounting bracket 6.3, namely that said mounting bracket 6.3 of said mounting assembly 6 is built and positioned in such a manner, that all of said three dampers 6.2 are secured via said mounting bracket 6.3 to all of said three solid structures 6.1 in said attachment state of said vehicle component 2. This can be seen best by looking at Fig. 3 and 4. Hereby, on the one hand each of the dampers 6.2 are kept in firm contact to the corresponding one of said solid structures 6.1 in order to take care for a proper function of said dampers 6.2 and thus of said mounting assembly 6 in total. On the other hand, said mounting bracket 6.3 gives a rigid overall structure to said mounting assembly 6.

Moreover, a quite compact design of the inventive vehicle component 2 according to the exemplary embodiment is achieved by the specific design of said mounting bracket 6.3 of said mounting assembly 6, which comprises a reception 6.3.1 for each of said three dampers 6.2 fixed to the corresponding one of said three solid structures 6.1. As can be seen from Fig. 3, by encompassing said dampers 6.2 fixed to said solid structures 6.1 via said mounting bracket 6.3, said mounting assembly 6 is secured to said vacuum pump 2. The assembly of said mounting bracket 6.3 to the rest of said vacuum pump 2 with said solid structures 6.1 and said dampers 6.2 is symbolized in Fig. 3 by an arrow 10. Thus, said mounting bracket 6.3 is encompassing said dampers 6.2 clamped to said solid structures 6.1 via said receptions 6.3.1.

In order to enable for inspection of the presence, the proper position and the proper condition of said dampers 6.2 and said solid structures 6.1, said mounting bracket 6.3 comprises an inspection window 6.3.2 for each of said receptions 6.3.1. Said inspection windows 6.3.2 are built as openings in said mounting bracket 6.3. In Fig. 3, only two receptions 6.3.1 and only two inspection windows 6.3.2 for said three pairs of solid structures 6.1 and dampers 6.2 are visible. Said mounting bracket 6.3 comprises more than said three receptions 6.3.1 needed to receive said pairs of solid structures 6.1 and dampers 6.2. That way, said mounting bracket 6.3 is universal and can be used for different embodiments. The inspection function of said inspection windows 6.3.2 can be seen best from Fig. 4, where only one of said three inspection windows 6.3.2 is visible. Even in said attachment state of said vacuum pump 2 shown in Fig. 4 said inspection windows 6.3.2 enable to check the presence, the proper position and the proper condition of said dampers 6.2 as well as of said solid structures 6.1.

For fastening said vacuum pump 2 via said mounting assembly 6 to said framework 4 of said vehicle, said mounting bracket 6.3 comprises three integral bolts 6.3.3. Said integral bolts 6.3.3 of said mounting bracket 6.3 are built as molded-in threaded bolts 6.3.3, which are molded in said mounting bracket 6.3 made from a plastic material. Said vacuum pump 2 with said mounting assembly 6 comprising said mounting bracket 6.3 is fastened to said framework 4 of said vehicle via said molded-in threaded bolts 6.3.3 of said mounting bracket 6.3, inserted in clearance holes of said framework 4, and nut 12 corresponding to said molded-in threaded bolts 6.3.3. See Fig. 4, from which only one nut 12 is visible. Said clearance holes of said framework 4 are not displayed.

For instance, the invention can be employed advantageous for a lot of different vacuum pumps. The dampers and the solid structures can be of any shape, material and arrangement. Furthermore, the fixing of the dampers to the solid structures corresponding to each other is not limited to clamp-connections, but can be of any useful and suitable type. Thus, the dampers and the solid structures corresponding to each other can be fixed to each other in an inseparable way, too.

The inspection windows can also be covered by transparent tops in order to seal the inner part of the receptions.

Moreover, the mounting bracket does not have to have integral bolts for fastening the vacuum pump to the framework of the vehicle. But if integral bolts are used, the integral bolts can be of any useful and applicable type, dimension, material, arrangement and number.

### List of reference numbers

- 2: Vacuum pump
- 2.1: Flange of vacuum pump 2
- 4: Framework of a vehicle, to which the vacuum pump 2 is mounted
- 6: Mounting assembly of vacuum pump 2
- 6.1: Solid structure of mounting assembly 6
- 6.2: Damper of mounting assembly 6
- 6.3: Mounting bracket of mounting assembly 6
- 6.3.1: Reception of mounting bracket 6.3
- 6.3.2: Inspection window of mounting bracket 6.3
- 6.3.3: Integral bolts of mounting bracket, built as molded-in threaded bolts
- 8: Arrows, symbolizing the establishing of a clamp-connection of the dampers 6.2 and the corresponding solid structures 6.1
- 10: Arrow, symbolizing the establishing of the mounting assembly 6
- 12: Nut for establishing a screw-coupling between vacuum pump 2 and frame-work 4

## Claims

1. Vacuum pump (2) for attachment to a framework (4) of a vehicle, comprising a mounting assembly (6) for mounting said vacumm pump (2) to said framework (4) with three solid structures (6.1) and three dampers (6.2) corresponding pairwise to each other, whereat said mounting assembly (6) is designed and positioned to said framework (4) in an attachment state of said vacuum pump (2) in such a way, that a force acting from said framework (4) onto said vacuum pump (2) via a force transmission path is damped by said dampers (6.2),
whereat said mounting assembly (6) comprises a separate mounting bracket (6.3) for fastening said vacuum pump (2) to said framework (4) of said vehicle and positioned between said dampers (6.2) and said framework (4) of said vehicle in said attachment state of said vacuum pump (2), with respect to said force transmission path,
wherein,
said mounting bracket (6.3) is built in such a manner, that all of said solid structures (6.1) with all of said dampers (6.2) are substantially encompassed by said mounting bracket (6.3) in said attachment state of said vacuum pump (2),
whereat said mounting bracket (6.3) of said mounting assembly (6) comprises a reception (6.3.1) for each of said dampers (6.2) fixed to said corresponding solid structure (6.1) and said mounting bracket (6.3) comprises an inspection window (6.3.2) for said reception (6.3.1).

2. Vacuum pump (2) according to claim 1,
wherein,
said dampers (6.2) are built as a separate part (6.2) and separable or inseparable fixed to said corresponding solid part (6.1) of said vacuum pump (2).

3. Vacuum pump (2) according to claim 2,
wherein,
said dampers (6.2) are fixed to said solid structures (6.1) corresponding to said dampers (6.2) in a separable manner via a clamp-connection.

4. Vacuum pump (2) according to one of the claims 1 to 3,
wherein,
said dampers (6.2) are formed of an elastomer.

5. Vacuum pump (2) according to one of the claims 1 to 4,
wherein,
said mounting bracket (6.3) is built and positioned in such a manner, that all of said dampers (6.2) are secured via said mounting bracket (6.3) to all of said solid structures (6.1).

6. Vacuum pump (2) according to one of the claims 1 to 5,
wherein,
said mounting bracket (6.3) comprises integral bolts (6.3.3) for fastening said vacuum pump (2) to said framework (4) of said vehicle.

## Patentansprüche

1. Vakuumpumpe (2) zur Befestigung an einem Rahmen (4) eines Fahrzeugs, umfassend eine Montageanordnung (6) zum Montieren der Vakuumpumpe (2) an dem Rahmen (4) mit drei massiven Strukturen (6.1) und drei Dämpfern (6.2), die einander paarweise entsprechen, wobei die Montageanordnung (6) so gestaltet und in einem Befestigungszustand der Vakuumpumpe (2) so an dem Rahmen (4) positioniert ist, dass eine von dem Rahmen (4) auf die Vakuumpumpe (2) über einen Kraftübertragungsweg wirkende Kraft durch die Dämpfer (6.2) gedämpft wird,
wobei die Montageanordnung (6) einen separaten Montagehalter (6.3) zum Befestigen der Vakuumpumpe (2) an dem Rahmen (4) des Fahrzeugs umfasst und im Befestigungszustand der Vakuumpumpe (2) in Bezug auf den Kraftübertragungsweg zwischen den Dämpfern (6.2) und dem Rahmen (4) des Fahrzeugs positioniert ist,
wobei
der Montagehalter (6.3) in einer solchen Weise gebaut ist, dass alle der massiven Strukturen (6.1) mit allen Dämpfern (6.2) im Befestigungszustand der Vakuumpumpe (2) im Wesentlichen von dem Montagehalter (6.3) umgeben sind, wobei der Montagehalter (6.3) der Montageanordnung (6) eine Aufnahme (6.3.1) für jeden der an der entsprechenden massiven Struktur (6.1) befestigten Dämpfer (6.2) umfasst und der Montagehalter (6.3) ein Inspektionsfenster (6.3.2) für die Aufnahme (6.3.1) umfasst.

2. Vakuumpumpe (2) nach Anspruch 1,
wobei
die Dämpfer (6.2) als ein separates Teil (6.2) gebaut und trennbar oder untrennbar an dem entsprechenden massiven Teil (6.1) der Vakuumpumpe (2) befestigt sind.

3. Vakuumpumpe (2) nach Anspruch 2,
wobei
die Dämpfer (6.2) an den massiven Strukturen (6.1), die den Dämpfern (6.2) entsprechen, in einer trennbaren Weise über eine Klemmverbindung befestigt sind.

4. Vakuumpumpe (2) nach einem der Ansprüche 1 bis 3,
wobei
die Dämpfer (6.2) aus einem Elastomer gebildet sind.

5. Vakuumpumpe (2) nach einem der Ansprüche 1 bis 4,
wobei
der Montagehalter (6.3) in einer solchen Weise gebaut und positioniert ist, dass alle Dämpfer (6.2) über den Montagehalter (6.3) an allen der massiven Strukturen (6.1) befestigt sind.

6. Vakuumpumpe (2) nach einem der Ansprüche 1 bis 5,
wobei
der Montagehalter (6.3) integrale Schrauben (6.3.3) zum Befestigen der Vakuumpumpe (2) an dem Rahmen (4) des Fahrzeugs umfasst.

## Revendications

1. Pompe à vide (2) à fixer sur le châssis (4) d'un véhicule, comprenant un ensemble de montage (6) pour le montage de la pompe à vide (2) sur le châssis (4) au moyen de trois paires constituées de trois structures solides (6.1) et trois amortisseurs (6.2.) correspondants, l'ensemble de montage (6) étant conçu et positionné sur le châssis (4) avec la pompe à vide (2) fixée de telle sorte qu'une force agissant depuis le châssis (4) sur la pompe à vide (2) via une voie de transmission de force soit amortie par les amortisseurs (6.2),
l'ensemble de montage (6) comprenant un support de montage séparé (6.3) pour fixer la pompe à vide (2) sur le châssis (4) du véhicule et étant positionné entre les amortisseurs (6.2) et le châssis (4) du véhicule avec la pompe à vide (2) fixée de la manière indiquée, par rapport à la voie de transmission de force, sachant que
le support de montage (6.3) est construit de telle manière que toutes les structures solides (6.1) avec tous les amortisseurs (6.2) sont en grande partie englobés par le support de montage (6.3) dans l'état de fixation décrit de la pompe à vide (2),
le support de montage (6.3) de l'ensemble de montage (6) comprenant une réception (6.3.1) pour chacun des amortisseurs (6.2) fixés à la structure solide correspondante (6.1) et le support de montage (6.3) comprenant une fenêtre d'inspection (6.3.2) pour la réception (6.3.1).

2. Pompe à vide (2) selon la revendication 1,
sachant que,
les amortisseurs (6.2) sont construits comme une pièce séparée (6.2) et fixés de manière séparable ou inséparable à la partie solide correspondante (6.1) de la pompe à vide (2).

3. Pompe à vide (2) selon la revendication 2,
sachant que,
les amortisseurs (6.2) sont fixés aux structures solides (6.1) correspondant aux amortisseurs (6.2) de manière séparable par l'intermédiaire d'une liaison par collier.

4. Pompe à vide (2) selon l'une des revendications 1 à 3,
sachant que
les amortisseurs (6.2) sont constitués d'un élastomère.

5. Pompe à vide (2) selon l'une des revendications 1 à 4,
sachant que
le support de montage (6.3) est construit et positionné de manière à ce que tous les amortisseurs (6.2) soient fixés par le support de montage (6.3) à toutes les structures solides (6.1).

6. Pompe à vide (2) selon l'une des revendications 1 à 5,
sachant que
le support de montage (6.3) comprend des boulons intégraux (6.3.3) pour fixer la pompe à vide (2) aux châssis (4) du véhicule.
